Europäisches Patentamt

European Patent Office

Office européen des brevets

(19)

(11) **EP 0 784 200 A2**

(12) **EUROPÄISCHE PATENTANMELDUNG**

(43) Veröffentlichungstag:
16.07.1997 Patentblatt 1997/29

(51) Int. Cl.<sup>6</sup>: **G01F 1/68**

(21) Anmeldenummer: 96113128.1

(22) Anmeldetag: 16.08.1996

(84) Benannte Vertragsstaaten:
**CH DE FR GB LI**

(30) Priorität: 12.01.1996 CH 87/96

(71) Anmelder: **Landis & Gyr Technology Innovation AG**
**6301 Zug (CH)**

(72) Erfinder:
• **Mannhart, Jevgenij**
**6330 Cham (CH)**
• **Jandl, Josef**
**6300 Zug (CH)**

(54) **Anordnung zur Durchflussmessung eines gasförmigen Stoffes**

(57) Die Anordnung ist mit einem von einem Teil des gasförmigen Stoffes durchflossenen Hohlraum und mit mindestens zwei Dioden (8, 9) als Temperatur-Messelementen sowie mindestens einem Heizwiderstand (10) versehen, von denen je ein Anschluss thermisch leitend mit einer Kupferschicht verbunden ist. Der Hohlraum ist ein teilweise offener Gehäusehohlraum (5a), der durch eine mit der Kupferschicht versehene Leiterplatte (6) gasdicht verschlossen ist. An zwei Enden des Gehäusehohlraums (5a) ist je eine Gehäuseöffnung (7a bzw. 7b) zum Einströmen beziehungsweise Ausströmen des gasförmigen Stoffes angeordnet. Die Anordnung ist billig und staubbedingte Störungen sind leicht und schnell zu beheben.

Fig. 2

EP 0 784 200 A2

## Beschreibung

Die Erfindung bezieht sich auf eine Anordnung zur Durchflussmessung eines gasförmigen Stoffes gemäss dem Oberbegriff des Anspruchs 1.

Die Anordnung wird als Anemometer, insbesondere zur Durchflussmessung von Luft verwendet.

Eine erste Anordnung der eingangs genannten Art ist aus der Druckschrift "Aktuelle Technik 6/94, Seiten 8 bis 9, Thermischer Massemesser - das ideale Messgerät für Gase" bekannt. Eine zweite Anordnung der eingangs genannten Art ist aus der US-PS 5 410 912 bekannt.

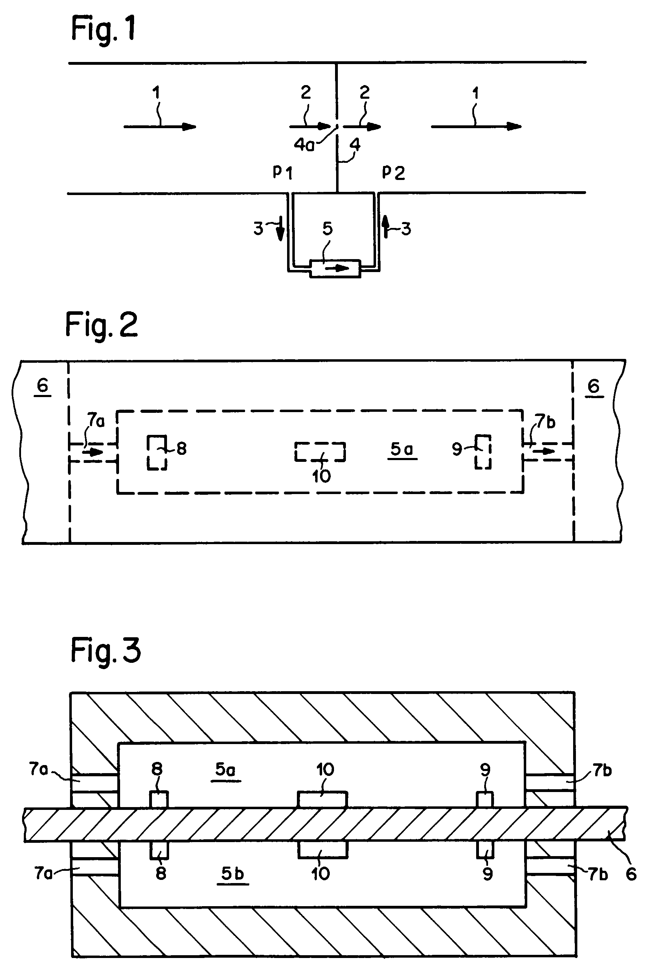

Der Durchfluss des gasförmigen Stoffes wird sowohl in den bekannten als auch in den erfindungsgemässen Varianten in einen Haupt- und einen Nebenstrom aufgeteilt (siehe Fig. 1). Der erstere durchfliesst vorzugsweise viele einzelne Kanäle, die sogenannten Laminardurchfluss-Kanäle. In der Fig. 1 wurden die letzteren aus Gründen der zeichnerischen Einfachheit durch einen in der Mitte mit einer Öffnung versehenen Diaphragma ersetzt. In den bekannten Anordnungen durchfliesst der Nebenstrom Kapillare, die den eigentlichen Sensor bilden. Dieser weist ausserdem ein Kapillarrohr auf, welches von mehreren Spulen umwickelt ist, die einer Heizung und/oder einer Temperaturmessung dienen. Das Kapillarrohr besitzt z. B. einen Durchmesser von 0,2mm, so dass es leicht durch Staub verstopft werden kann. Die dadurch bedingten Störungen sind nur schwer und nur mittels zeitraubende Manipulationen zu beheben.

In der ersten bekannten Anordnung sind auf dem Kapillarrohr eine Heizwicklung und zwei Temperaturfühler-Wicklungen angeordnet. Die Heizwicklung befindet sich dabei in der Mitte, auf halbem Weg zwischen den beiden Temperaturfühler-Wicklungen. Ohne Gasfluss verhält sich die Wärmeverteilung entlang dem Kapillarrohr, ausgehend von der Heizwicklung, in beiden Richtungen symmetrisch. Bei einem Gasfluss durch das Kapillarrohr, wird die zuerst vom einströmenden Gas erreichte erste Temperaturfühler-Wicklung durch das noch nicht geheizte Gas abgekühlt, während die zuletzt vom Gas erreichte zweite Temperaturfühler-Wicklung durch das in der Zwischenzeit durch die Heizwicklung aufgeheizte Gas leicht erwärmt wird. Mit den beiden so erzeugten und mittels der Temperaturfühler-Wicklungen gemessenen Temperaturänderungen $\Delta T1$ und $\Delta T2$ kann u. a. der Massendurchfluss des gasförmigen Stoffes ermittelt werden. Es gelten folgende Formeln:

$$\Delta T = T2 - T1 \qquad (I),$$

$$\Delta T = k \cdot Cp \cdot \rho \cdot \Phi v \text{ und}$$

$$\Delta T = k \cdot Cp \cdot \Phi m$$

wobei Cp eine spezifische Wärme des Gases, $\rho$ eine Dichte des Gases, $\Phi v$ ein Volumendurchfluss des Gases, $\Phi m$ der Massendurchfluss des Gases sowie T1 und T2 zwei von den beiden Temperaturfühler-Wicklungen ermittelten Temperaturen bezeichnet. Eine integrierte Elektronik wandelt die vom Sensor gelieferten Temperaturen in normierte elektrische Signale um und weist fakultativ Impulsausgänge oder digitale Ausgangs-Schnittstellen auf.

In der zweiten bekannten Anordnung sind die beiden Temperaturfühler-Wicklungen gleichzeitig auch Heizwicklungen, so dass eine eigentliche, in der Mitte zwischen den beiden Temperaturfühler-Wicklungen angeordnete Heizwicklung überflüssig und nicht vorhanden ist. Die zweite bekannte Anordnung besitzt eine Konstantstrom- und eine Konstanttemperatur-Untervariante. In der ersteren (siehe US-PS 5 410 912, Fig. 1) sind die beiden Heizwicklungen ein Teil einer Messbrücke, die von einer Konstantstromquelle mit einem konstanten Strom I gespeist wird. Zwei diametral gegenüberliegende Punkte der Messbrücke sind auf die Eingänge eines Differenzverstärkers geführt, dessen Ausgangssignal proportional der Differenz $\Delta V$ der in den beiden Heizwicklungen erzeugten Spannungsabfälle V1 und V2 ist. Der zu messende Massedurchfluss $\Phi m$ des gasförmigen Stoffes ist proportional $\Delta V \cdot I$ und damit proportional $\Delta V$, da I konstant ist. Da der durch die Heizwicklungen fliessende Strom konstant ist, hat diese Untervariante den Vorteil, dass sich die Temperatur der durch die Heizwicklungen erzeugten Hitze automatisch ändert, wenn die Umgebungstemperatur sich ändert. Anderseits ist eine relativ lange Zeit erforderlich bis die Temperatur der Heizwicklungen sich - bedingt durch den Durchfluss des gasförmigen Stoffes - ändert, d. h. die Messanordnung ist sehr träge.

In der Konstanttemperatur-Untervariante (siehe US-PS 5 410 912, Fig. 2) ist jede der beiden Heizwicklungen ein Teil einer eigenen Messbrücke, die jeweils über einen eigenen Bipolartransistor so gespeist wird, dass die betreffende Messbrücke im Gleichgewicht bleibt, d. h. der Widerstandswert und die Temperatur der zugehörigen Heizwicklung bleiben, unbeeinflusst vom Durchfluss des gasförmigen Stoffes, konstant. Um dies zu erreichen sind zwei diametral gegenüberliegende Punkte der jeweiligen Messbrücke über einen eigenen Komparator mit der Basis des zugehörigen Bipolartransistors verbunden. Der zu messende Massedurchfluss $\Phi m$ des gasförmigen Stoffes ist proportional $[V_1^2/R_1 - V_2^2/R_2]$ bzw. proportional $\Delta V [V_1 + V_2]/R$, wenn $R_1 = R_2 = R$ der Widerstand der beiden Heizwicklungen und $\Delta V = [V_1 - V_2]$ die Differenz der in den beiden Heizwicklungen erzeugten Spannungsabfälle V1 und V2 ist. Der Massedurchfluss $\Phi m$ ist wieder proportional $\Delta V$, wenn $[V_1 + V_2]/R$ konstant ist. Diese Messanordnung reagiert sehr schnell auf den Durchfluss des gasförmigen Stoffes, hat jedoch den Nachteil, dass, wenn die Umgebungstemperatur nahe der Temperatur der beiden Heizwicklungen liegt, die Spannungen $V_1$ und $V_2$ sehr schwer messbar sind und dass sie, wenn die Umgebungstemperatur über der Temperatur der beiden Heizwicklungen liegt, nicht mehr funktionsfähig ist.

Der Erfindung liegt die Aufgabe zugrunde, eine Anordnung der eingangs genannten Art einerseits zu verbilligen und andererseits so zu verbessern, dass staubbedingte Störungen leicht und schnell zu beheben sind.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den abhängigen Ansprüchen.

Ausführungsbeispiele der Erfindung sind in der Zeichnung dargestellt und werden im folgenden näher beschrieben.

Es zeigen:

Fig. 1    eine prinzipielle Anordnung zur Aufteilung eines Durchflusses eines gasförmigen Stoffes in einen Haupt- und in einen Nebenstrom,

Fig. 2    eine schematische Draufsicht einer ersten und zweiten Variante der erfindungsgemässen Anordnung,

Fig. 3    einen schematischen Querschnitt der zweiten Variante der erfindungsgemässen Anordnung,

Fig. 4    einen schematischen Querschnitt einer dritten Variante der erfindungsgemässen Anordnung,

Fig. 5    einen schematischen Querschnitt einer vierten Variante der erfindungsgemässen Anordnung,

Fig. 6    ein Schaltbild einer Konstantstrom-Variante der ersten Variante der erfindungsgemässen Anordnung,

Fig. 7    ein Schaltbild einer Konstanttemperatur-Variante der ersten Variante der erfindungsgemässen Anordnung,

Fig. 8    ein Schaltbild einer ersten Konstanttemperatur-Variante der vierten Variante der erfindungsgemässen Anordnung und

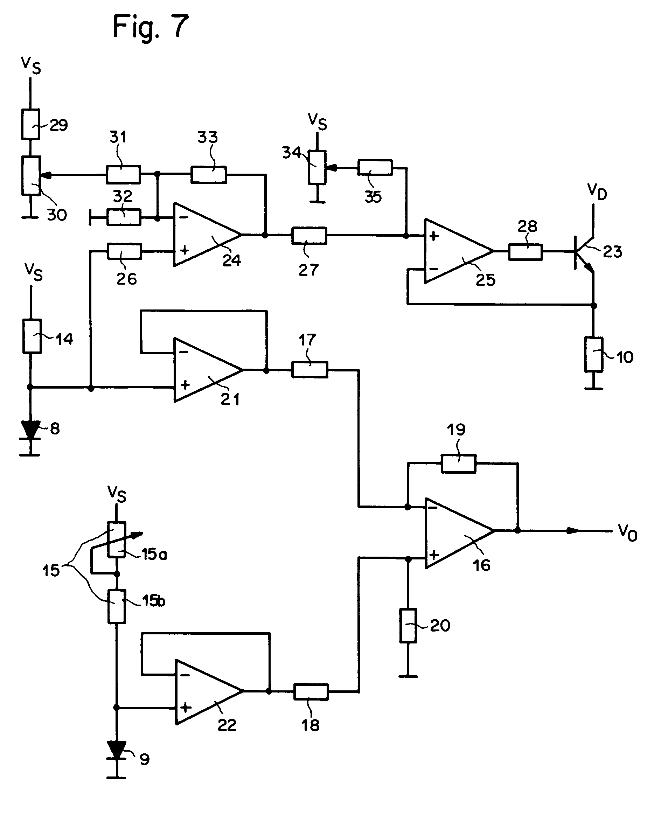

Fig. 7    ein Schaltbild einer zweiten Konstanttemperatur-Variante der vierten Variante der erfindungsgemässen Anordnung.

In der in der Fig. 1 dargestellten Anordnung teilt sich ein Durchfluss 1 eines gasförmigen Stoffes in einen Hauptstrom 2 und einen Nebenstom 3. Der Hauptstrom 2 durchquert z. B. eine Öffnung 4a eines Diaphragmas 4, aufdessen Vorderseite ein Druck $p_1$ und auf dessen Rückseite ein Druch $p_2$ herrscht. Ein Teil des gasförmigen Stoffes durchfliesst als Nebenstrom 3 laminar einen Hohlraum 5, um sich nach dem Diaphragma 4 wieder mit dem Hauptstrom 2 zu vereinigen. Der Hohlraum 5 ist, in der Fig. 1 nicht dargestellt, mit mindestens zwei Temperatur-Messelementen sowie mindestens einem Heizelement versehen und bildet zusammen mit seinem Inhalt eine Anordnung zur Durchflussmessung des gasförmigen Stoffes.

In einer ersten Variante der erfindungsgemässen Anordnung (siehe Fig. 2 und oberer Teil der Fig. 3) ist der von einem Teil des gasförmigen Stoffes durchflossene Hohlraum 5 ein auf einer ersten Seite mindestens teilweise offener Gehäusehohlraum 5a eines Gehäuses. Eine Leiterplatte 6 ist gasdicht auf der ersten Seite des Gehäusehohlraums 5a angeordnet. Ein den Gehäusehohlraum 5a schliessender Teil der Leiterplatte 6 ist mindestens auf seiner dem Gehäusehohlraum 5a zugewandten Seite mit einer Kupferschicht versehen. An zwei Enden des Gehäusehohlraums 5a ist je eine Gehäuseöffnung 7a bzw. 7b zum Einströmen beziehungsweise Ausströmen des obenerwähnten Teils des gasförmigen Stoffes so angeordnet, dass der betreffende Teil des gasförmigen Stoffes bei seinem Fluss durch den Gehäusehohlraum 5a über die Kupferschicht fliesst. Innerhalb des Gehäusehohlraums 5a und jeweils von der Kupferschicht elektrisch isoliert ist an zwei den Gehäuseöffnungen 7a und 7b zugewandten Enden der Kupferschicht je eines der beiden Temperatur-Messelemente auf der Leiterplatte 6 angeordnet. Die beiden Temperatur-Messelemente sind vorzugsweise Dioden 8 und 9, von denen je ein Anschluss thermisch leitend mit der Kupferschicht verbunden ist. Die Temperatur der letzteren wird somit in der Nähe der Gehäuseöffnungen 7a und 7b mittels der Dioden 8 und 9 gemessen, deren Temperaturkoeffizient annähernd 2,3 mV/°K beträgt. In der ersten Variante ist in der Mitte, auf halbem Weg zwischen den beiden Dioden 8 und 9 ein Heizwiderstand 10 als Heizelement auf der Leiterplatte 6 angeordnet. Ein Anschluss des Heizwiderstandes 10 ist thermisch leitend mit der Kupferschicht verbunden.

In einer zweiten bis vierten Variante der erfindungsgemässen Anordnung (siehe Fig. 3 bis Fig. 5) ist ein weiterer, zweiter Gehäusehohlraum 5b vorhanden, wobei die Leiterplatte 6 eine für beide Gehäusehohlräume 5a und 5b gemeinsame Leiterplatte ist. Die beiden Gehäusehohlräume 5a und 5b sind ähnlich ausgebildet und befinden sich jeweils aufeiner unterschiedlichen der beiden Seiten der gemeinsamen Leiterplatte 6. Dabei ist die Leiterplatte 6 auf der jeweils mindestens teilweise offenen ersten Seite der Gehäusehohlräume 5a und 5b gasdicht angeordnet. Die die Gehäusehohlräume 5a und 5b jeweils schliessende Teile der gemeinsamen Leiterplatte 6 sind auf ihrer dem betreffenden Gehäusehohlraum 5a bzw. 5b zugewandten Seite jeweils mit einer Kupferschicht versehen. Die beiden Gehäusehohlräume 5a und 5b sind bevorzugt gleich dimensioniert und ausgebildet. Sie sind dann vorzugsweise symmetrisch zur gemeinsamen Leiterplatte 6 auf beiden Seiten der letzteren angeordnet.

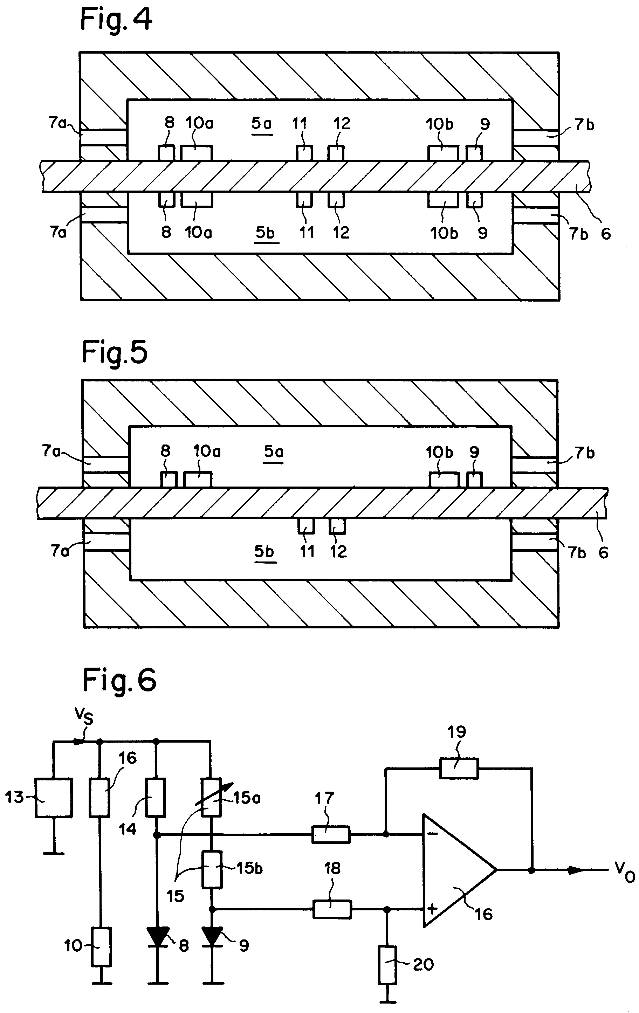

In der zweiten und dritten Variante (siehe Fig. 3 und Fig. 4) sind die beiden Gehäusehohlräume 5a und 5b auf gleicher Weise bestückt mit jeweils mindestens zwei Temperatur-Messelementen und mindestens einem Heizelement, die in den beiden Gehäusehohlräumen 5a und 5b ähnlich angeordnet sind. In diesem Fall sind zwei gleiche Anemometer vorhanden, eines auf jeder Seite der Leiterplatte 6, so dass ein doppeltes Nutzsignal anfällt. In der zweiten Variante (siehe Fig. 3) ist dabei in den beiden Gehäusehohlräumen 5a und 5b jeweils in der Mitte, auf halbem Weg zwischen den beiden als Temperatur-Messelementen verwendeten Dioden 8 und 9 ein Heizwiderstand 10 als Heizelement angeordnet, wobei jeweils ein Anschluss der beiden Heizwiderstände 10 thermisch leitend mit der dem betreffenden Gehäusehohlraum 5a bzw. 5b zugewandten Kupferschicht der gemeinsamen Leiterplatte 6 verbunden ist. In der dritten Variante (siehe Fig. 4) ist in den beiden Gehäusehohlräumen 5a und 5b jeweils in der Nähe der beiden Dioden 8 und 9 je ein Heizwiderstand 10a bzw. 10b als Heizelement angeordnet. Ausserdem sind in der Mitte, auf halbem Weg zwischen den beiden Dioden 8 und 9 jeweils zwei weitere Dioden 11 und 12 zur Messung einer Umgebungstemperatur angeordnet. Dabei ist in den beiden Gehäusehohlräumen 5a und 5b jeweils ein Anschluss der beiden Heizwiderstände 10a und 10b und der vier Dioden 8, 9, 11 und 12 thermisch leitend mit der dem betreffenden Gehäusehohlraum 5a bzw. 5b zugewandten Kupferschicht der gemeinsamen Leiterplatte 6 verbunden.

In der vierten Variante (siehe Fig. 5) ist in einem ersten der beiden Gehäusehohlräume 5a jeweils in der Nähe der beiden Dioden 8 und 9 je ein Heizwiderstand 10a bzw. 10b als Heizelement angeordnet. Im zweiten der beiden Gehäusehohlräume 5b sind in der Nähe eines Mittelpunktes, der sich gegenüberliegend einem Mittelpunkt befindet, der sich im ersten Gehäusehohlraum 5a in der Mitte zwischen den beiden Dioden 8 und 9 befindet, zwei weitere Dioden 11 und 12 als Referenzdioden zur Messung der Gas- und Umgebungstemperatur angeordnet. In den beiden Gehäusehohlräumen 5a und 5b ist jeweils ein Anschluss der beiden Heizwiderstände 10a und 10b beziehungsweise der beiden weiteren Dioden 11 und 12 thermisch leitend mit der dem betreffenden Gehäusehohlraum 5a bzw. 5b zugewandten Kupferschicht der gemeinsamen Leiterplatte 6 verbunden.

In einer Konstantstrom-Variante der ersten Variante (siehe Fig. 6) speist z. B. eine Konstantspannungsquelle 13, deren eine Pol an Masse liegt und deren Ausgangsspannung $V_S$ ist, über je einen hochohmigen Vorwiderstand 14 bzw. 15 bzw. 16 die beiden Dioden 8 und 9 sowie den Heizwiderstand 10 mit je einem konstanten Strom. Der Vorwiderstand 15 besteht vorzugsweise aus einem einstellbaren Widerstand 15a und einem Konstantwiderstand 15b, die beide in Reihe geschaltet sind. Ein Operationsverstärker 16 ist als Differenzverstärker geschaltet, der die Differenz der Spannungsabfälle über die beiden Dioden 8 und 9 misst, welche Differenz ein Mass für die Durchflussrate des gasförmigen Stoffes ist (siehe z. B. Gleichung I). Zu diesem Zweck sind z. B. die Anoden der beiden Dioden 8 und 9 über je einen Widerstand 17 bzw. 18 mit einem invertierenden bzw. nichtinvertierenden Eingang des Operationsverstärkers 16 verbunden, während ihre Kathoden an Masse liegen. Der invertierende Eingang des Operationsverstärkers 16 ist ausserdem über einen Rückkopplungswiderstand 19 mit einem Ausgang des Operationsverstärkers 16 verbunden, während dessen nichtinvertierender Eingang noch über einen Widerstand 20 an Masse liegt.

In der Konstantstrom-Variante ist das Ausgangssignal der Anordnung, d. h. ein Ausgangssignal $V_0$ des Differenzverstärkers, abhängig von der Umgebungstemperatur und von der Temperatur des zugeführten Gases. Daher dient in einer nachfolgend beschriebenen Konstanttemperatur-Variante der ersten Variante (siehe Fig. 7) eine der beiden Dioden, z. B. die Diode 8, als Referenzdiode zur Steuerung der Heizleistung des Heizwiderstandes 10, so dass die Abhängigkeit von der Gastemperatur und der Umgebungstemperatur wesentlich geringer ist. Die Konstanttempemperatur-Variante ist dabei ähnlich aufgebaut wie die Konstantstrom-Variante mit folgenden Unterschieden:

- Die Anoden der beiden Dioden 8 und 9 sind über je einen Spannungsfolger mit den Widerständen 17 und 18 verbunden. Die Spannungsfolger bestehen je aus einem Operationsverstärker 21 bzw. 22, dessen Ausgang jeweils mit seinem invertierenden Eingang verbunden ist, während sein nichtinvertierender Eingang jeweils einen Eingang des betreffenden Spannungsfolgers bildet.
- Ausserdem speist eine Gleichspannung $V_D$ den Heizwiderstand 10 über eine Kollektor-Emitter-Strecke eines Transistors 23, vorzugsweise eines NPN-Bipolartransistors. Die Basis des letzteren wird von einem Konstanttemperatur-Regler gespeist, der einen Operationsverstärker 24 und einen Operationsverstärker 25 enthält, die in der angegebenen Reihenfolge in Kaskade geschaltet sind. Die Anode der Diode 8 ist dabei über einen Widerstand 26 mit einem nichtinvertierenden Eingang des Operationsverstärkers 24 verbunden, dessen Ausgang über einen Widerstand 27 auf einen nichtinvertierenden Eingang des Operationsverstärkers 25 geführt ist, dessen Ausgang seinerseits über einen Widerstand 28 mit der Basis des Transistors 23 verbunden ist. Die Gleichspannung $V_S$ speist über einen Vorwiderstand 29 ein Potentiometer 30, dessen Schleifer über einen Widerstand 31 mit einem invertierenden Eingang des Operationsverstärkers 24 verbunden ist, welcher Eingang ausserdem über einen Widerstand 32 an Masse liegt und über einen Rückkopplungswiderstand 33 mit dem Ausgang des Operationsverstärkers 24 verbunden ist. Die Gleichspannung $V_S$ speist auch ein Potentiometer 34, dessen Schleifer über einen Widerstand 35 mit dem invertierenden Eingang des Operationsverstärkers 25 verbunden ist, dessen invertierender Eingang mit einem gemeinsamen Anschluss des Heizwiderstandes 10 und des Emitters des Transistors 23 verbunden ist.

In der Konstantstrom- und Konstanttemperatur-Variante der ersten und zweiten Variante ist somit jeweils ein Differenzverstärker vorhanden zur Messung der Differenz der Spannungsabfälle über die beiden Dioden 8 und 9, welche beide mit einem konstanten Strom gespeist sind. In der Konstanttemperatur-Variante ist dabei eine der beiden Dioden, z. B. die Diode 8, ausserdem eine Referenzdiode eines Reglers, der die Heizleistung des Heizwiderstandes 10 regelt.

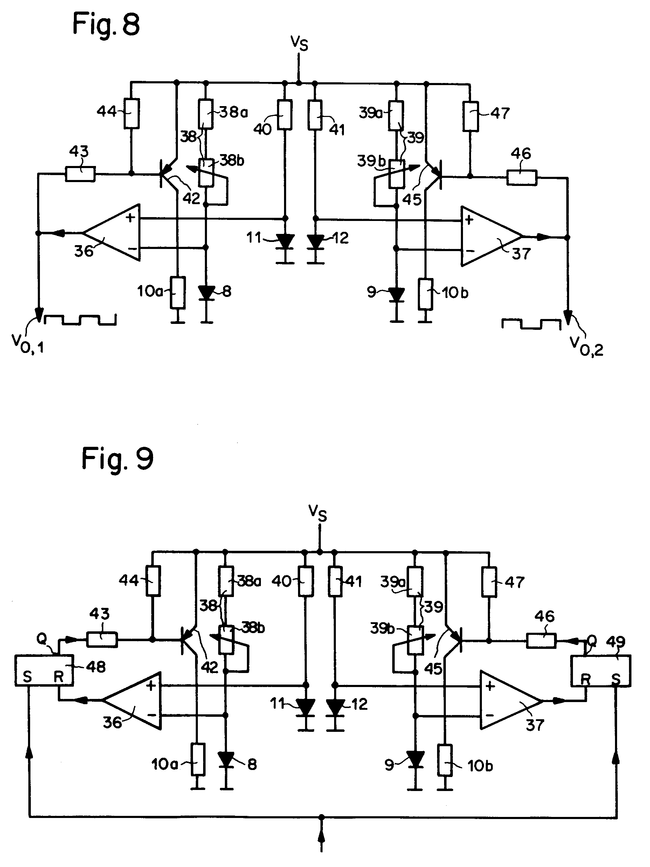

Eine erste Konstanttemperatur-Variante der vierten Variante (siehe Fig. 8) enthält zwei Operationsverstärker 36 und 37, deren Ausgänge je einen Impulsausgang der Anordnung bilden, an dem eine Impuls-Ausgangsspannung $V_{O,1}$ bzw. $V_{O,2}$ ansteht. Die Dioden 8, 9, 11 und 12 werden von der Gleichspannung $V_S$ über je einen hochohmigen Vorwiderstand 38, 39, 40 oder 41 gespeist. Die Vorwiderstände 38 und 39 bestehen je aus einem Konstantwiderstand 38a bzw. 39a und einem einstellbaren Widerstand 38b bzw. 39b, die beide jeweils in Reihe geschaltet sind. Die Anoden der Dioden 8 und 9 sind mit einem invertierenden Eingang des Operationsverstärkers 36 bzw. 37 verbunden, während die Anoden der Dioden 11 und 12 mit einem nichtinvertierenden Eingang des Operationsverstärkers 36 bzw. 37 verbunden sind. Die Gleichspannung $V_S$ speist über eine Emitter-Kollektor-Strecke eines Transistors 42, z. B. eines PNP-Bipolartransistors, den Heizwiderstand 10a, wobei der Ausgang des Operationsverstärkers 36 über einen Widerstand 43 mit der Basis des Transistors 42 verbunden ist, die ausserdem noch über einen Widerstand 44 von der Gleichspannung $V_S$ gespeist ist. Die letztere speist über eine Emitter-Kollektor-Strecke eines Transistors 45, z. B. eines PNP-Bipolartransistors, den Heizwiderstand 10b, wobei der Ausgang des Operationsverstärkers 37 über einen Widerstand 46 mit der Basis des Transistors 45 verbunden ist, die ausserdem noch über einen Widerstand 47 von der Gleichspannung $V_S$ gespeist ist.

Eine zweite Konstanttemperatur-Variante der vierten Variante (siehe Fig. 9) ist ähnlich aufgebaut wie die erste Konstanttemperatur-Variante mit folgenden Unterschieden:

- Ein gemeinsamer Setz-Eingang der Anordnung ist mit einem Setz-Eingang S eines ersten und zweiten RS-Flip Flops 48 und 49 verbunden. Der Ausgang des Operationsverstärkers 36 ist auf einen Rückstelleingang R des RS-Flip Flops 48 geführt, dessen Q-Ausgang über den Widerstand 43 mit der Basis des Transistors 42 verbunden ist. Der Ausgang des Operationsverstärkers 37 ist aufeinen Rückstelleingang R des RS-Flip Flops 49 geführt, dessen Q-Ausgang über den Widerstand 46 mit der Basis des Transistors 45 verbunden ist.

Die dritte und vierte Variante sind bedeutend weniger träge als die erste und zweite Variante. In den beiden ersteren sind die beiden Dioden 8 und 9 durch den der betreffenden Diode 8 bzw. 9 jeweils zugeordneten Heizwiderstand 10a bzw. 10b auf eine konstante Temperatur geheizt, die um eine vorbestimmten Temperaturdifferenz höher ist als die Temperatur der beiden als Referenzdioden verwendeten weiteren Dioden 11 und 12. Die beiden Operationsverstärker 36 und 37 arbeiten als zwei Komparatoren, die die Heizwiderstände 10a und 10b ausschalten, sobald die Temperaturdifferenz den vorbestimmten Wert übersteigt. Die Differenz der Heizzeiten dient als Mass für die Durchflussrate. In der in der Fig. 9 dargestellten Schaltung sind die beiden Heizwiderstände 10a und 10b von einem Mikrocomputer über die beiden Flip Flops 48 und 49 synchron einschaltbar sowie mittels der Dioden 8 und 9 jeweils individuell ausschaltbar. Der Mikrocomputer verarbeitet die Differenz der Heizzeiten weiter, da sie z. B. noch radiziert werden muss.

Die Gehäusehohlräume 5a und 5b sind Teile eines oder mehrerer Gehäuse. Das oder die Gehäuse sind vorzugsweise schnappbar aufder Leiterplatte 6 befestigt, wobei eine vorher aufgebrachte Gummilösung als luftdichte Dichtung dient. In allen erfindungsgemässen Varianten ersetzen billige Heizwiderstände 10 bzw. 10a und 10b teure Platin- oder Nickelwiderstände der Heizwicklungen der bekannten Anordnungen. Die Bildung der Gehäusehohlräume 5a und 5b als Luftkammern ist praktisch gratis im Gegensatz zur Herstellung von Röhrchen mit kleinem Innendurchmesser der bekannten Anordnungen. Das Reinigen der Luftkammern ist einfach und staubbedingte Störungen sind leicht und schnell zu beheben. Die Messgenauigkeit, ohne Spitzenwerte zu erreichen, ist für viele Anwendungen ausreichend.

**Patentansprüche**

1. Anordnung zur Durchflussmessung eines gasförmigen Stoffes, mit einem von einem Teil des gasförmigen Stoffes durchflossenen Hohlraum (5) und mit mindestens zwei Temperatur-Messelementen sowie mindestens einem Heizelement, dadurch gekennzeichnet,

   - dass der Hohlraum (5) ein auf einer ersten Seite mindestens teilweise offener Gehäusehohlraum (5a) eines Gehäuses ist,
   - dass eine Leiterplatte (6) gasdicht auf der ersten Seite des Gehäusehohlraums (5a) angeordnet ist,
   - dass ein den Gehäusehohlraum (5a) schliessender Teil der Leiterplatte (6) mindestens auf seiner dem Gehäusehohlraum (5a) zugewandten Seite mit einer Kupferschicht versehen ist,
   - dass an zwei Enden des Gehäusehohlraums (5a) je eine Gehäuseöffnung (7a bzw. 7b) zum Einströmen beziehungsweise Ausströmen des Teils des gasförmigen Stoffes so angeordnet ist,
   - dass der betreffende Teil des gasförmigen Stoffes bei seinem Fluss durch den Gehäusehohlraum (5a) über die Kupferschicht fliesst,
   - dass innerhalb des Gehäusehohlraums (5a) und jeweils von der Kupferschicht elektrisch isoliert an zwei den Gehäuseöffnungen (7a, 7b) zugewandten Enden der Kupferschicht je eines der beiden Temperatur-Messelemente auf der Leiterplatte (6) angeordnet ist und

- dass die beiden Temperatur-Messelemente Dioden (8, 9) sind, von denen je ein Anschluss thermisch leitend mit der Kupferschicht verbunden ist.

2. Anordnung nach Anspruch 1, dadurch gekennzeichnet, dass in der Mitte zwischen den beiden Dioden (8, 9) ein Heizwiderstand (10) als Heizelement auf der Leiterplatte (6) angeordnet ist und ein Anschluss des Heizwiderstandes (10) thermisch leitend mit der Kupferschicht verbunden ist.

3. Anordnung nach Anspruch 1, dadurch gekennzeichnet,

- dass ein weiterer, zweiter Gehäusehohlraum (5b) vorhanden ist,
- dass die Leiterplatte (6) eine für beide Gehäusehohlräume (5a, 5b) gemeinsame Leiterplatte ist,
- dass die beiden Gehäusehohlräume (5a, 5b) ähnlich ausgebildet sind und sich jeweils auf einer unterschiedlichen der beiden Seiten der gemeinsamen Leiterplatte (6) befinden,
- wobei die Leiterplatte (6) auf der jeweils mindestens teilweise offenen ersten Seite der Gehäusehohlräume (5a, 5b) gasdicht angeordnet ist,
- dass die die Gehäusehohlräume (5a, 5b) jeweils schliessende Teile der gemeinsamen Leiterplatte (6) auf ihrer dem betreffenden Gehäusehohlraum (5a bzw. 5b) zugewandten Seite mit einer Kupferschicht versehen sind.

4. Anordnung nach Anspruch 3, dadurch gekennzeichnet, dass die beiden Gehäusehohlräume (5a, 5b) gleich dimensioniert und ausgebildet sind.

5. Anordnung nach Anspruch 4, dadurch gekennzeichnet, dass die beiden Gehäusehohlräume (5a, 5b) symmetrrisch zur gemeinsamen Leiterplatte (6) auf beiden Seiten der letzteren angeordnet sind.

6. Anordnung nach einem der Ansprüche 3 bis 5, dadurch gekennzeichnet, dass die beiden Gehäusehohlräume (5a, 5b) auf gleicher Weise bestückt sind mit jeweils mindestens zwei Temperatur-Messelementen und mindestens einem Heizelement, die in den beiden Gehäusehohlräumen (5a, 5b) ähnlich angeordnet sind.

7. Anordnung nach Anspruch 6, dadurch gekennzeichnet, dass in den beiden Gehäusehohlräumen (5a, 5b) jeweils in der Mitte zwischen zwei als Temperatur-Messelemente verwendete Dioden (8, 9) ein Heizwiderstand (10) als Heizelement angeordnet ist und jeweils ein Anschluss der beiden Heizwiderstände (10) thermisch leitend mit der dem betreffenden Gehäusehohlraum (5a bzw. 5b) zugewandten Kupferschicht der gemeinsamen Leiterplatte (6) verbunden ist.

8. Anordnung nach Anspruch 6, dadurch gekennzeichnet,

- dass in den beiden Gehäusehohlräumen (5a, 5b) jeweils in der Nähe der beiden Dioden (8, 9) je ein der betreffenden Diode (8 bzw. 9) zugeordneter Heizwiderstand (10a, 10b) als Heizelement angeordnet ist,
- dass in der Mitte zwischen den beiden Dioden (8, 9) jeweils zwei weitere Dioden (11, 12) zur Messung einer Umgebungstemperatur angeordnet sind, und
- dass in den beiden Gehäusehohlräumen (5a, 5b) jeweils ein Anschluss der beiden Heizwiderstände (10a, 10b) und der vier Dioden (8, 9, 11, 12) thermisch leitend mit der dem betreffenden Gehäusehohlraum (5a, 5b) zugewandten Kupferschicht der gemeinsamen Leiterplatte (6) verbunden ist.

9. Anordnung nach Anspruch 5, dadurch gekennzeichnet,

- dass in einem ersten der beiden Gehäusehohlräume (5a) jeweils in der Nähe der beiden Dioden (8, 9) je ein der betreffenden Diode (8 bzw. 9) zugeordneter Heizwiderstand (10a, 10b) als Heizelement angeordnet ist,
- dass im zweiten der beiden Gehäusehohlräume (5b) in der Nähe eines Mittelpunktes, der sich gegenüberliegend einem Mittelpunkt befindet, der sich im ersten Gehäusehohlraum (5a) in der Mitte zwischen den beiden Dioden (8, 9) befindet, zwei weitere Dioden (11, 12) als Referenzdioden zur Messung einer Gas- und Umgebungstemperatur angeordnet sind, und
- dass in den beiden Gehäusehohlräumen (5a, 5b) jeweils ein Anschluss der beiden Heizwiderstände (10a, 10b) beziehungsweise der beiden weiteren Dioden (11, 12) thermisch leitend mit der dem betreffenden Gehäusehohlraum (5a bzw. 5b) zugewandten Kupferschicht der gemeinsamen Leiterplatte (6) verbunden ist.

10. Anordnung nach einem der Ansprüche 3 bis 9, dadurch gekennzeichnet, dass die Gehäusehohlräume (5a, 5b) Teile eines oder mehrerer Gehäuse sind.

11. Anordnung nach einem der Ansprüche 1 bis 10, dadurch gekennzeichnet, dass das oder die Gehäuse schnappbar auf der Leiterplatte 6 befestigt sind, wobei eine vorher aufgebrachte Gummilösung als luftdichte Dichtung dient.

12. Anordnung nach Anspruh 2 oder 7, dadurch gekennzeichnet, dass ein Differenzverstärker vorhanden ist zur Messung der Differenz der Spannungsabfälle über die beiden Dioden 8 und 9, welche mit einem konstanten Strom gespeist sind.

13. Anordnung nach Anspruh 12, dadurch gekennzeichnet, dass eine der beiden Dioden (8) ausserdem eine Referenzdiode eines Reglers ist, der die Heizleistung des Heizwiderstandes (10) regelt.

14. Anordnung nach Anspruch 8 oder 9, dadurch gekennzeichnet, dass die beiden Dioden (8, 9) durch den der betreffenden Diode (8 bzw. 9) jeweils zugeordneten Heizwiderstand (10a bzw. 10b) auf eine konstante Temperatur geheizt sind, die um eine vorbestimmte Temperaturdifferenz höher ist als die Temperatur der beiden weiteren Dioden (11, 12).

15. Anordnung nach Anspruch 14, dadurch gekennzeichnet, dass zwei Komparatoren die Heizwiderstände (10a, 10b) ausschalten, sobald die Temperaturdifferenz den vorbestimmten Wert übersteigt.

16. Anordnung nach Anspruch 14 oder 15, dadurch gekennzeichnet, dass die beiden Heizwiderstände (10a, 10b) von einem Mikrocomputer über zwei Flip Flops (48, 49) synchron einschaltbar sowie mittels der Dioden (8, 9) individuell ausschaltbar sind.

## Fig. 1

## Fig. 2

## Fig. 3

# Fig. 4

# Fig. 5

# Fig. 6

# Fig. 7

## Fig. 8

## Fig. 9